# EUROPÄISCHE PATENTSCHRIFT

(11) **EP 2 324 966 B1**
(45) Veröffentlichungstag und Bekanntmachung des Hinweises auf die Patenterteilung: **29.10.2014**
(21) Anmeldenummer: 10014345.2
(22) Anmeldetag: 05.11.2010
(51) Int. Cl.: B25J 9/16

(54) **Verfahren und Vorrichtung zur Planung und/oder Steuerung einer Roboterapplikation**
Device and method for controlling and/or planning a robot application
Procédé et dispositif destinés à la planification et/ou à la commande d'une application de robot

(30) Priorität: 20.11.2009 DE 102009054112
(43) Veröffentlichungstag der Anmeldung: 25.05.2011
(73) Patentinhaber: KUKA Laboratories GmbH, 86165 Augsburg (DE)
(72) Erfinder: Bongardt, Thomas, 86179 Augsburg (DE); Jacob, Dirk, 87616 Marktoberdorf (DE); Kohler, Thomas, 86368 Gersthofen (DE); Weiß, Martin, 86459 Margerstshausen (DE); Schlickenrieder, Klaus, 86497 Horgau (DE)
(74) Vertreter: Schlotter, Alexander Carolus Paul

(56) Entgegenhaltungen:
- EP-A1- 0 292 857
- EP-A1- 1 253 496
- EP-A2- 0 605 050
- WO-A1-03/045640
- DE-A1-102008 006 982
- US-A1- 2005 177 276
- HASEMANN J-M: "A robot control architecture based on graph grammars and fuzzy logic", INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CO NFERENCE ON MUNICH, GERMANY 12-16 SEPT. 1994, NEW YORK, NY, USA,IEEE, Bd. 3, 12. September 1994 (1994-09-12), Seiten 2123-2130, XP010142017, DOI: DOI:10.1109/IROS.1994.407572 ISBN: 978-0-7803-1933-2
- PATRICK MCDOWELL,CRIS KOUTSOUGERAS: "GRAPH MEMORY DEVELOPMENT IN A ROBOT CONTROL", ACM, 2 PENN PLAZA, SUITE 701 - NEW YORK USA, April 2009 (2009-04), XP040468340,
- TREEHOUSE: 'Should you go Beyond Relational Databases?', [Online] 24 Juni 2009, XP055097154 Gefunden im Internet: <URL:http://blog.teamtreehouse.com/should-y ou-go-beyond-relational-databases> [gefunden am 2014-01-20]
- SCHAEFFER ET AL: "Graph clustering", 20070801, vol. 1, no. 1, 1 August 2007 (2007-08-01), pages 27-64, XP022365527,

## Beschreibung

Die vorliegende Erfindung betrifft ein Verfahren und eine Vorrichtung zur Planung und/oder Steuerung einer Roboterapplikation auf Basis von System- und/oder Prozessparametern.

Arbeitsprozesse von einem oder mehreren Robotern werden heute teilweise offline auf Basis von Prozess- und/oder Robotermodellen geplant und im Betrieb auf Basis von Systemparametern wie beispielsweise Reglerkoeffizienten und kalibrierten Modellparametern gesteuert. Solche System- und Prozessparameter werden bislang getrennt verwaltet, beispielsweise zum Teil in einem Bahnplanungssystem, zum Teil in einer Gesamtsystemsteuerung und zum Teil in den einzelnen Robotersteuerungen. Dies erschwert die Planung und Steuerung der Roboterapplikation, insbesondere deren Optimierung sowie den Austausch und das Entfernen vorhandener bzw. das Hinzufügen neuer Applikationskomponenten, etwa anderer Roboterwerkzeuge, weiterer Roboter etc..

Die WO 00/25185 A1 schlägt eine hierarchische Wissensbasis zur Verknüpfung von Werkstück- und Prozessstereotypen, sogenannten Templates vor. Die DE 102 06 903 A1 lehrt ein baumstrukturiertes Produktionsausführungssystem ("Manufacturing Execution System" MES), in dem Sensor-, Aktor- und SPS-Objekte miteinander verknüpft sind. Der Einsatz einer Graphenstruktur zur Verwaltung von System- und Prozessparametern einer Roboterapplikation geht aus diesen objektorientierten Lösungen nicht hervor.

Die EP 0 292 857 A1 offenbart ein Steuerungssystem auf Basis von Graphen. Steuerungsoperationen von Komponenten einer Automatisierungsapplikation werden in einer Graphenstruktur zu einer Ausführungssequenz zusammengefüge.

Die EP 0 605 050 A2 offenbart eine Maschinenbewegungssteuerung, deren Software durch Kompilieren einer Datei mit einer kinematischen Beschreibung generiert wird, die sich auf Bezugssysteme bezieht, die bezüglich Körpern der Maschine fixiert sind.

Die DE 10 2008 006 982 A1 offenbart ein Verfahren zum Parametrieren eines Robotermodells, bei dem Parameter eines robotergeführten Werkzeugs mittels eines Lesegeräts oder aus einer Datenbank ausgelesen werden.

Aufgabe der vorliegenden Erfindung ist es, die Planung und/oder Steuerung einer Roboterapplikation auf Basis von System- und/oder Prozessparametern zu verbessern.

Diese Aufgabe wird durch ein Verfahren mit den Merkmalen des Anspruchs 1 gelöst. Anspruch 7 stellt eine Vorrichtung, Anspruch 8 bzw. 9 ein Computerprogramm bzw. ein Computerprogrammprodukt, insbesondere einen Datenträger bzw, ein Speichermedium, zur Durchführung eines Verfahrens nach Anspruch 1 unter Schutz. Die Unteransprüche betreffen vorteilhafte Weiterbildungen.

Ein erfindungsgemäßes Verfahren bzw. eine erfindungsgemäße Vorrichtung dient zur Planung und/oder Steuerung einer Roboterapplikation auf Basis von System- und/oder Prozessparametern.

Dabei umfasst eine Roboterapplikation im Sinne der vorliegenden Erfindung insbesondere den Aufbau und/oder Arbeitsprozess eines oder mehrerer Roboter, vorzugsweise Industrieroboter. Die Planung einer Roboterapplikation kann dementsprechend insbesondere einerseits die Auswahl, Dimensionierung, Konfiguration und/oder Parametrisierung wenigstens eines Roboters, robotergeführten Werkzeuges und/oder einer Robotersteuerung; andererseits die Prozess-, insbesondere Bahnplanung und vorzugsweise deren Optimierung umfassen. Die Steuerung einer Roboterapplikation kann entsprechend insbesondere die Steuerung von Arbeits-, insbesondere Bewegungsabläufen eines oder mehrerer Roboter sowie weiterer Applikationskomponenten wie, vorzugsweise robotergeführter, Werkzeuge, Transporteinrichtungen und dergleichen umfassen. Dabei wird zur kompakteren Darstellung auch eine Regelung, i.e. die Ausgabe von Stellgrößen an Aktoren unter Rückführung von Sensorwerten, als Steuerung im Sinne der vorliegenden Erfindung bezeichnet.

Die Applikation wird auf Basis gespeicherter System- und/oder Prozessparameter geplant bzw. gesteuert. Solche Parameter können insbesondere Modellparameter eines kinematischen oder dynamischen Modells einer Applikationskomponente, insbesondere eines Roboters oder einer Roboterkomponente, umfassen, etwa Masse(n), Schwerpunktlage(n), Trägheltsmoment(e), Steifigkeit(en), Dämpfung(en), Reibkoeffizient(en), Geometriegröße(n) wie Achslage(n) und -abstand/abstände, Getriebeübersetzung(en), Steuerungsparameter wie beispielsweise Reglerkoeffizienten, und/oder Umgebungs- und Prozessparameter wie zum Beispiel Werkstückparameter, Kontaktsteifigkeit(en), Werkstoffviskosität(en) und dergleichen. Beispielsweise kann auf Basis der Parameter eines dynamischen Modells eine Abweichung der Lage und/oder Orientierung eines TCPs eines Roboters aufgrund elastischer oder temperaturinduzierter Deformationen kompensiert werden.

Erfindungsgemäß werden solche Parameter, vorzugsweise alle bei der Planung bzw. Steuerung berücksichtigten Parameter der Applikation, mittels einer, bevorzugt zentralen, Graphenstruktur verwaltet, insbesondere gespeichert.

Eine Graphenstruktur umfasst dabei im Sinne der vorliegenden Erfindung einen oder mehrere Knoten, denen jeweils ein oder mehrere Parameter zugeordnet sind, und in-, sur- oder bijektiven Relationen zwischen diesen Knoten, die in der Graphentheorie auch als Linien bzw. Kanten bezeichnet werden. Die Graphenstruktur kann gerichtet oder ungerichtet, mit oder ohne Mehrfachkanten sowie als Multi- oder Hypergraphe ausgebildet sein und weist vorzugsweise eine Baumstruktur auf, in der jedem Knoten genau ein Vorgänger zugeordnet ist.

Die Verwaltung der Parameter in einer, vorzugsweise zentralen, Graphenstruktur ermöglicht vorteilhafterweise eine effizientere Abspeicherung und einen effizienteren Zugriff auf Parameterwerte, um diesen beispielsweise bei einer (Re)Kalibrierung, Parameteridentifikation oder Optimierung Werte zuzuweisen. Zudem kann die Konsistenz von Parametern einer Applikation sichergestellt werden.

Insbesondere können Parameterwerte individuell auf die jeweilige konkrete Applikation oder Applikationskomponente abgestimmt werden. So können beispielsweise bei einem absoilutkalibrierten Roboter nach einem Komponententausch Parameter der getauschten Komponente gezielt identifiziert und/oder aktualisiert werden.

Auch die Graphenstruktur kann Individuell auf die Applikation oder Applikationskomponenten abgestimmt werden. So kann beispielsweise die Graphenstruktur auf die Kinematik, Antriebstechnik und/oder Sensorik eines Roboters der Applikation abgestimmt werden.

Ein Modell der Applikation oder einer Applikationskomponente, beispielsweise ein Roboter-, oder Prozessmodell, kann dann anhand der Graphenstruktur sukzessive, beispielsweise dynamisch, aus den Parametern aufgebaut werden. Dies gewährleistet, dass stets mit aktuellen Parameterwerten geplant bzw. geregelt wird.

Erfindungsgemäß werden Parameter geclustert verwaltet. Dabei werden zwei oder mehr Parameter, die nur gemeinsam bzw. in ihrer Gesamtwirkung identifiziert werden, zu einem Knoten zusammengefasst. Vorteilhaft reduziert dies die Komplexität der Graphenstruktur und bildet physikalische Schnittstellen besser ab.

Vorzugsweise werden aus den abgespeicherten bzw. in der Graphenstruktur vorgesehenen Parametern zum Planen und/oder Steuern der Applikation für diese jeweils relevante Parameter ausgewählt. Beispielsweise können Parameter für eine Momentenripple- oder Cogging-Kompensation in den Antrieben vorgesehen sein, die jedoch nur bei eher langsamen Roboterbewegungen erforderlich ist. Daher können zur Planung bzw. Steuerung von schnellen Roboterbewegungen diese dann nicht relevanten Parameter gezielt nicht ausgewählt werden, was wiederum die Komplexität der Graphenstruktur reduziert und beispielsweise eine Optimierung vereinfacht.

Gemäß einer bevorzugten Ausführung werden Parameterwerte mit Nominalwerten vorbelegt. Dies ermöglicht einerseits die Planung bzw. Steuerung, ohne zunächst für diese Parameter individuelle Werte ermitteln und abspeichern zu müssen. Gleichermaßen kann, beispielsweise durch Vorgabe von Null-Nominalwerten, der entsprechende Parameter als nicht relevant nicht ausgewählt werden.

Zusätzlich oder alternativ können Parameterwerte, insbesondere selektiv, veränderbar sein, um sie beispielsweise an einen Roboter individuell anzupassen. Die Veränderbarkeit kann selektiv, insbesondere berechtigungs- oder benutzerspezifisch sein. So kann beispielsweise vorgesehen sein, dass nur ServicePersonal des Herstellers sicherheitsrelevante Parameter, die zum Beispiel den Notaus betreffen, verändern dürfen, qualifiziertes Inbetriebnahmepersonal des Betreibers Regelparameter umkonfigurieren und Zusatzachsparameter vorgeben darf, und einfache Bediener beispielsweise Werkzeugparameter eintragen dürfen. Zusätzlich oder alternativ können zulässige (Grenz)Werte bzw. Wertebereiche für veränderbare Parameter vorgegeben sein.

Insbesondere zur Nachverfolgung von Kundenproblemen, aber auch, um eine vorhergehende oder Originalkonfiguration einfacher restaurieren zu können, werden in einer bevorzugten Ausführung ein oder mehrere Parameterwerte vor Veränderung gesichert. Dies kann beispielsweise dadurch implementiert sein, dass der Wert eines veränderbaren Parameters vor Veränderung, beispielsweise in einer Kopie der Graphenstruktur und ihrer Parameterwerte, gesichert, beispielsweise in einer Robotersteuerung oder einer separaten Datenverarbeitungseinrichtung abgespeichert wird. Gleichermaßen kann auch umgekehrt die Planung bzw. Steuerung auf Basis einer aktualisierten Kopie der ursprünglichen Graphenstruktur und ihrer Parameterwerte erfolgen, wobei die Kopie die geänderten Parameterwerte und somit den aktuellen Systemzustand aufweist.

Gemäß einer bevorzugten Ausführung werden bei Austausch, Modifikation, Hinzufügen und/oder Entfernen einer Applikationskomponente automatisch zugehörige Parameter oder Parameterwerte angepasst. Vorzugsweise wird die Applikationskomponente, beispielsweise ein anderes Roboterwerkzeug, mit einem komponentenspezifischen Datensatz geliefert, der die individuellen Parameterwerte enthält. Vorzugsweise sind die zugehörigen Parameterwerte auf der Komponente selber gespeichert und werden bei ihrer Verbindung mit dem Gesamtsystem, beispielsweise Anschluss des Werkzeugs an den Roboter, in plug&play-Technologie in die Graphenstruktur übernommen.

Weitere Vorteile und Merkmale ergeben sich aus den Unteransprüchen und den Ausführungsbeispielen. Hierzu zeigt, teilweise schematisiert:
- Fig. 1:: einen Roboter mit einer Steuerung nach einer Ausführung der vorliegenden Erfindung; und
- Fig. 2:: eine Graphenstruktur nach einer Ausführung der vorliegenden Erfindung in der Steuerung der Fig. 1.

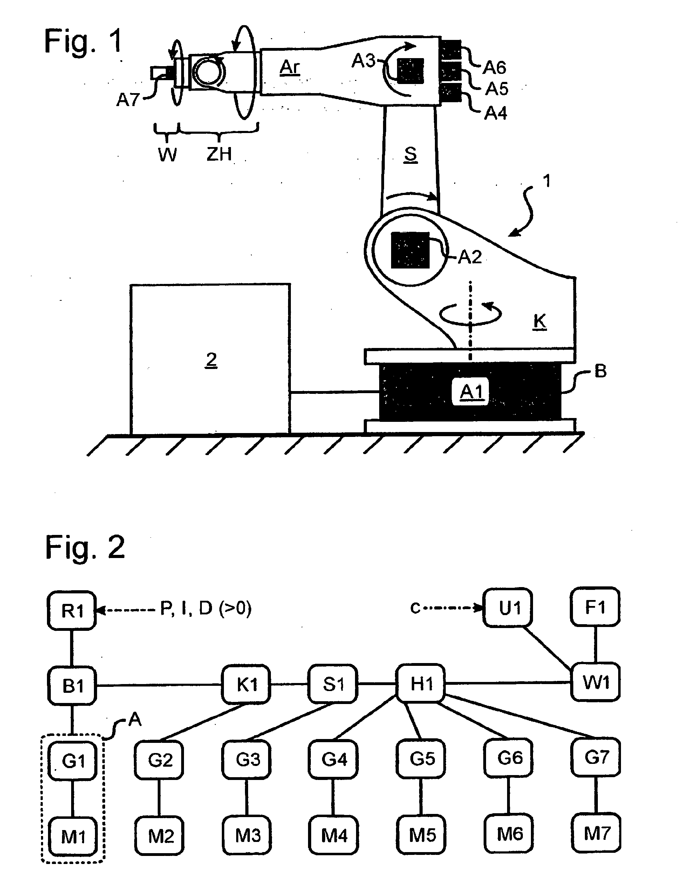

Fig. 1 zeigt einen sechsachsigen Knickarmroboter 1 mit einer mit ihm verbundenen Robotersteuerung 2 nach einer Ausführung der vorliegenden Erfindung. Die Antriebe A1 bis A6 des Roboters 1 sowie A7 eines Greifers W sind durch ausgefüllte Rechtecke angedeutet, die Bewegungsmöglichkeiten des Roboters durch Pfeile.

Der Roboter 1 weist eine Basis B, ein Karussell K, eine Schwinge S, einen Arm Ar und eine Zentralhand ZH auf.

In der Steuerung 2 ist ein dynamisches Modell implementiert, das beispielsweise Starrkörper- und/oder elastische Bewegungen des Roboters und auf ihn wirkende Antriebsmomente aufeinander abbildet und so etwa eine modellbasierte Regelung oder eine Bahnoptimierung ermöglicht. Dieses Modell umfasst Systemparameter, insbesondere Strom- bzw. Spannungs-Momenten-Umrechungsfaktoren M1,...M7 und Getriebe-Reibkoeffizienten und -übersetzungen G1,...G7 der sieben Antriebe A1,...A7, geometrische Trägheits- und Steifigkeitswerte der Basis, des Karussells, der Schwinge, der Arm Ar und Zentralhand ZH umfassenden Hand und des Werkzeugs B1, K1, S1, H1 bzw. W1, Regelparameter R1 der Robotersteuerung und Parameter S1 eines Kraftsensors (nicht dargestellt), beispielsweise Kalibrierungskoeffizienten, sowie Prozessparameter, etwa eine Umgebungssteifigkeit U1 zur Modellierung eines Kontaktes zwischen Werkzeug W und einem Werkstück.

Diese Parameter werden in der Steuerung 2 mittels der in Fig. 2 skizzierten Graphenstruktur zentral verwaltet. Diese ist an die Kinematik der Roboterapplikation angepasst und weist entsprechend eine Baumstruktur auf, indem beispielsweise die Motorparameter M1,...M7 mit den Parametern G1,...G7 der mit den entsprechenden Motoren verbundenen Getriebe und diese wiederum mit den Parametern B1, K1, S1 bzw. H1 der entsprechenden Roboterkomponente B, K, S, Ar+ZH bzw. W verknüpft sind. So sind zum Beispiel die Parameter G2 des Getriebes des Antriebs A2 und über sie auch die Parameter M2 des zugehörigen Motors mit den Parametern K1 des Karussells verknüpft, an dem der Antrieb A2 angeordnet ist.

Exemplarisch sind die Motor- und Getriebeparameter M1, G1 des Antriebs A1 zu einem Subsystem A geclustert, wie in Fig. 2 strichliert angedeutet, da beispielsweise nur der Reibwiderstand des gesamten Antriebs A1 gemessen werden kann. Das Subsystem A wird entsprechend als ein Knoten der Graphenstruktur verwaltet und bildet so die physikalische Schnittstelle ab. Wird beispielsweise nur der Motor des Antriebs A1 getauscht, müssen entsprechend die Parameter des gesamten Subsystems A neu identifiziert werden.

Alle Parameter M1,...U1 sind vom Hersteller mit Nominalwerten vorbelegt. Hierzu kann beispielsweise der Roboter vorab kalibriert bzw. Parameter identifiziert werden. Dadurch sind allen Parametern individuelle Werte für den konkreten Roboter zugewiesen.

Verschiedene Benutzergruppen können diese Parameter teilweise innerhalb vorgegebener Grenzen verändern. So kann beispielsweise Inbetriebnahmepersonal die Proportional-, Integral- und Differentialverstärkungen P, I bzw. D eines PID-Reglers einstellen, wobei diese größer 0 sein müssen. Dies ist durch den strichdoppelpunktierten Pfeil in Fig. 2 angedeutet. Einfache Bediener können, wie durch den strichpunktierten Pfeil in Fig. 2 angedeutet, zum Beispiel einen Steifigkeitswerte c einstellen, der die Kontaktsteifigkeit der Umgebung beschreibt und etwa bei einem kraftgeregelten Fügen des Roboters berücksichtigt wird.

In beiden Fällen werden vor Abspeichern der neuen, vom Benutzer vorgegebenen Werte P, I, D bzw. c in den Parametern R1 bzw. U1 die vorherigen Werte gesichert, beispielsweise in einer Kopie der wertebelegten Graphenstruktur, um so eine Änderungsnachverfolgung und -restaurierung zu ermöglichen.

Aus den in Graphenstruktur verwalteten Parameter werden die für die jeweilige Applikation relevanten Parameter ausgewählt und beispielsweise ein Beobachtermodell zur Abschätzung nicht-beobachtbarer Zustandsgrößen, etwa der elastischen Deformationen der Roboterkomponenten, sukzessive aus diesen entsprechend der die Kinematik abbildenden Graphenstruktur aufgebaut. Beispielsweise werden zur Modellierung rascher Roboterbewegungen Parameter in M1,...M7, die ein Momentenrippel oder Cogging beschreiben, ignoriert, indem sie beispielsweise mit Null belegt werden.

Regelparameter R1 sind üblicherweise für den Fall optimiert, dass der Roboter im Wesentlichen mit seiner Nominalbelastung arbeitet. Soll der Roboter nun mit kleineren Lasten betrieben werden, können diese, beispielsweise als Umgebungsparameter U1, vorgegeben werden. Dann können einerseits in der Prozess- bzw. Bahnplanung die Regelparameter R1 hierfür optimiert werden. Andererseits kann die Steuerung 2 im Betrieb auf diese geänderten, zentral in der Graphenstruktur der Fig. 2 verwalteten Parameter zugreifen und die Applikation so optimal steuern.

Die zentrale Verwaltung kann insbesondere in einer Recheneinrichtung, beispielsweise einem Prozess-Server oder Steuerungs-PC implementiert sein, um Zugriffszeiten und Datentransfer zu reduzieren. Gleichermaßen kann sie auch verteilt implementiert sein, indem beispielsweise die Struktur in einer Recheneinrichtung, durch diese verwalteten Parameterwerte selbst in einer oder mehreren anderen Recheneinrichtungen gespeichert werden.

### Bezugszeichenliste

- 1: Roboter
- 2: Steuerung
- A, A1, ...A7: Antrieb(sparameter)
- M1, ... M7: Motorparameter
- G1, ...G7: Getriebeparameter
- B(1): Basis(parameter)
- K(1): Karussell(parameter)
- S(1): Schwinge(nparameter)
- H(1): Hand(parameter)
- W(1): Werkzeug(parameter)
- U1: Umgebungsparameter
- R1: Regelparameter
- F1: Kraftsensorparameter

## Patentansprüche

1. Verfahren zur Planung und/oder Steuerung einer Roboterapplikation (1) auf Basis von System- und/oder Prozessparametern (M1,...M7, G1,...G7, B1, K1, S1, H1, W1, P1, U1, R1), mit den Schritten:
Speichern von Parameterwerten; und
Planen und/oder Steuern der Applikation auf Basis gespeicherter Parameterwerte, **dadurch gekennzeichnet, dass**
Parameter mittels einer Graphenstruktur (Fig. 2) verwaltet werden, die einen oder mehrere Knoten, denen jeweils ein oder mehrere Parameter zugeordnet sind, und in-, sur- oder bijektive Relationen zwischen diesen Knoten umfasst
wobei Parameter geclustert verwaltet werden, indem zwei oder mehr Parameter, die nur gemeinsam identifiziert werden, zu einem Knoten zusammengefasst werden.

2. Verfahren nach dem vorhergehenden Anspruch, **dadurch gekennzeichnet, dass** Parameter und/oder die Graphenstruktur individuell auf die Applikation oder Applikationskomponenten abgestimmt werden.

3. Verfahren nach einem der vorhergehenden Ansprüche, **dadurch gekennzeichnet, dass** zum Planen und/oder Steuern der Applikation relevante Parameter ausgewählt werden.

4. Verfahren nach einem der vorhergehenden Ansprüche, **dadurch gekennzeichnet, dass** Parameterwerte mit Nominalwerten vorbelegt und/oder, insbesondere selektiv, veränderbar sind.

5. Verfahren nach Anspruch 4, **dadurch gekennzeichnet, dass** ein Parameterwert vor Veränderung gesichert wird.

6. Verfahren nach einem der vorhergehenden Ansprüche, **dadurch gekennzeichnet, dass** bei Austausch, Modifikation, Hinzufügen und/oder Entfernen einer Applikationskomponente automatisch zugehörige Parameter oder Parameterwerte angepasst werden.

7. Vorrichtung (2) zur automatisierten Planung und/oder Steuerung einer Roboterapplikation (1) auf Basis von System- und/oder Prozessparametern (M1,...M7, G1,...G7, B1, K1, S1, H1, W1, F1, U1, R1), **dadurch gekennzeichnet, dass** die Vorrichtung zur Durchführung eines Verfahrens nach einem der vorhergehenden Ansprüche eingerichtet ist.

8. Computerprogramm, das ein Verfahren nach einem der Ansprüche 1 bis 6 ausführt, wenn es in einer Vorrichtung nach Anspruch 7 abläuft.

9. Computerprogrammprodukt mit Programmcode, derauf einem maschinenlesbaren Träger gespeichert ist und ein Computerprogramm nach Anspruch 8 umfasst.

## Claims

1. A method for planning and/or controlling a robot application (1) based on system and/or process parameters (M1,...M7, G1,...G7, B1, K1, S1, H1, W1, F1, U1, R1), the method comprising the steps:
storing of parameter values; and
planning and/or controlling the application based on stored parameter values, **characterized in that**
parameters are managed using a graph structure (Fig. 2), which comprises one or more nodes to each of which one or more parameters are assigned, and injective, surjective or bijective relations between these nodes,
wherein parameters are managed in clusters by combining two or more parameters which are only identified together, to a node.

2. A method according to the preceding claim, **characterized in that** parameters and/or the graph structure are adjusted individually to the application or application components.

3. A method according to one of the preceding claims, **characterized in that** parameters are selected which are relevant for planning and/or controlling the application.

4. A method according to one of the preceding claims, **characterized in that** parameter values are preset to nominal values and/or are, in particular selectively, changeable.

5. A method according to claim 4, **characterized in that** a parameter value is stored before changing.

6. A method according to one of the preceding claims, **characterized in that**, when an application component is exchanged, modified, added and/or removed, parameters or parameter values associated therewith are adjusted automatically.

7. An apparatus (2) for automated planning and/or controlling a robot application (1) based on system and/or process parameters (M1,...M7, G1,...G7, B1, K1, S1, H1, W1, F1, U1, R1), **characterized in that** the apparatus is arranged for carrying out a method according to one of the preceding claims.

8. A computer program carrying out a method according to one of the claims 1 to 6 if it runs in an apparatus according to claim 7.

9. A computer program product comprising a program code, which is stored on a machine-readable carrier and which comprises a computer program according to claim 8.

## Revendications

1. Procédé destiné à la planification et/ou à la commande d'une application de robot (1) sur la base de paramètres de système et/ou de processus (M1, ...M7, G1, ...G7, B1, K1, S1 H1, W1, F1, U1, R1), comprenant les étapes consistant à :
mettre en mémoire des valeurs de paramètres ; et
planifier et/ou commander l'application sur la base des valeurs de paramètre mises en mémoire, **caractérisé en ce que**
les paramètres sont gérés au moyen d'une structure de graphes (figure 2), laquelle comprend un ou plusieurs noeuds auxquels sont associés respectivement un ou plusieurs paramètres, et des relations injectives, surjectives ou bijectives entre ces noeuds,
les paramètres étant gérés par regroupement, par le fait que deux paramètres ou plus, lesquels ne sont identifiés que conjointement, sont regroupés pour former un noeud.

2. Procédé selon la revendication précédente, **caractérisé en ce que** les paramètres et/ou la structure de graphes sont adaptés individuellement à l'application ou aux composants de l'application.

3. Procédé selon l'une quelconque des revendications précédentes, **caractérisé en ce que** des paramètres pertinents sont sélectionnés pour la planification et/ou la commande de l'application.

4. Procédé selon l'une quelconque des revendications précédentes, **caractérisé en ce que** les valeurs de paramètres sont prédéfinies avec des valeurs nominales et/ou modifiées, en particulier de manière sélective.

5. Procédé selon la revendication 4, **caractérisé en ce qu'**une valeur de paramètre est fixée avant une modification.

6. Procédé selon l'une quelconque des revendications précédentes, **caractérisé en ce que** lors d'un remplacement, d'une modification, d'un ajout et/ou d'un retrait d'un composant de l'application, des paramètres ou des valeurs de paramètres associé(e)s sont automatiquement adapté(e)s.

7. Dispositif (2) de planification et/ou de commande automatisée d'une application de robot (1) sur la base de paramètres de système et/ou de processus (M1 ...M7, G1 ...G7, B1, K1, S1, H1, W1, F1, U1, R1), **caractérisé en ce que** le dispositif est conçu pour mettre en oeuvre un procédé selon l'une quelconque des revendications précédentes.

8. Programme informatique exécutant un procédé selon l'une quelconque des revendications 1 à 6 lorsqu'il se déroule dans un dispositif selon la revendication 7.

9. Produit-programme informatique pourvu d'un code de programme, lequel est mis en mémoire sur un support lisible sur machine et comprend un programme informatique selon la revendication 8.
